# EUROPÄISCHE PATENTSCHRIFT

(11) **EP 2 462 201 B1**
(45) Veröffentlichungstag und Bekanntmachung des Hinweises auf die Patenterteilung: **16.10.2013**
(21) Anmeldenummer: 10744896.1
(22) Anmeldetag: 19.07.2010
(51) Int. Cl.: C09D 129/14, C09D 7/00, H01B 3/44, C08L 61/00, C08L 75/04

(54) **LÖSEMITTELZUSAMMENSETZUNG UND DRAHTBESCHICHTUNGSMITTEL**
SOLVENT COMPOSITION AND WIRE COATING MEDIUM
COMPOSITION DE SOLVANT ET AGENT DE REVÊTEMENT DE FIL

(30) Priorität: 06.08.2009 DE 102009026343
(43) Veröffentlichungstag der Anmeldung: 13.06.2012
(73) Patentinhaber: Elantas GmbH, 46483 Wesel (DE)
(72) Erfinder: SONCINI, Giancarlo, 13503-240 Rio Claro (BR); LIENERT, Klaus-Wilhelm, 22763 Hamburg (DE)
(74) Vertreter: Fitzner, Uwe
(86) Internationale Anmeldenummer: PCT/EP2010/060428
(87) Internationale Veröffentlichungsnummer: WO 2011/015447

(56) Entgegenhaltungen:
- GB-A- 527 729
- GB-A- 1 588 939
- US-A- 3 342 893
- US-A- 3 606 922

## Beschreibung

Die vorliegende Erfindung betrifft eine spezielle Lösemittelzusammensetzung, ein Drahtbeschichtungsmittel enthaltend Polyvinylformal als Bindemittel und die Lösemittelzusammensetzung, sowie Verfahren zur Herstellung und Verwendung.

### Stand der Technik:

Die heute üblicherweise eingesetzten Drahtbeschichtungsmittel stellen im allgemeinen Lösungen der typischen Bindemittel, wie beispielsweise Polyvinylformale, Polyester, Polyesterimide und Polyurethanharze in kresolischen Lösemitteln, gegebenenfalls in Kombination mit handelsüblichen Kohlenwasserstoffverschnitten, dar.
Drahtbeschichtungsmittel auf der Basis von Polyvinylformalen sind seit langer Zeit bekannt. Das Bindemittel besteht aus Polyvinylalkohol der mit Aldehyden zu Polyvinylformal umgesetzt wurde. Das Polymer besitzt noch restliche Estergruppen aus der Hydrolyse des Polyvinylacetates zum Polyvinylalkohol, sowie freie OH-Gruppen, die nicht mit den Aldehyden reagiert haben. Über diese OH-Gruppen erfolgt mit Hilfe von anderen Harzen eine Vernetzung um einen duroplastischen Film auf dem Kupferdraht zu erzeugen.
In der GB 578 882 wird ein Drahtlack beschrieben, bestehend aus einem Polyvinylformalharz in Kombination mit einem Melaminharz.
Die Kombination Polyvinylformalharz mit Phenolharz wird in GB 810359 und GB 862 165 beschrieben.
Die Vernetzung des Polyvinylformalharzes mit blockierten Isocyanaten ist Gegenstand der GB 938 119.
Die Kombination aller aufgelisteten Vernetzer wird in den GB 975 455 und GB 1 112 186 beschrieben.
Gemeinsam all den Polyvinylformaldrahtlacken ist der geringe Festkörper der Drahtlacke, der sich im Bereich 20 bis 30% bewegt. Die Lösemittelzusammensetzung ist häufig Kresol zu Solvent Naphtha, meist im Verhältnis 1:1. Die kresolischen Lösemittel sind üblicherweise ein technisches Gemisch von verschiedenen Kresol- und Xylenolisomeren, die auch Phenol enthalten können. Als Verschnittmittel kommen Xylol, Solventnaphtha, Toluol, Ethylbenzol, Cumol, Schwerbenzol, verschiedene Solvesso und Shellsol-Typen sowie Deasol zum Einsatz. Diese Drahtlacke haben bei Festkörpern von 20 - 22% häufig Viskositäten im Bereich von 3000 - 6000 mPas. Eine Erhöhung des Festkörpers würde zu einem starken Anstieg der Viskosität führen und damit werden die Lacke nicht mehr lackierbar. Kresol ist darüber hinaus giftig und dadurch unter ökologischen und arbeitstechnischen Gesichtspunkten nachteilig.
Der Nachteil der bekannten Drahtbeschichtungsmittel auf der Basis von Polyvinylformalharzen besteht weiterhin darin, dass sie niedrige Festkörper und hohe Viskositäten aufweisen, sowie große Mengen an Kresol als Lösemittel enthalten. Kresolfreie Drahtlacke sind zwar bekannt und z.B. in DE 41 33 161 und US 7,521,498 beschrieben. Allerdings nicht für Drahtlacke auf Polyvinylformalbasis. In der Literatur werden häufig als Alternativlösemittel, Dimethylglykol, Ethylglykol, Isopropylglykol, Butylglykol, Methyldiglykol, Ethyldiglykol, Butyldiglykol beschrieben. In Betracht kommen auch Glykoletherester, beispielsweise Methylglykolacetat, Ethylglykolacetat, Butylglykolaceat und Methoxypropylacetat. Weitere Beispiele sind cyclische Carbonate, z.B. Polypropylencarbonat, cyclische Ester, Gamma-Butyrolacton sowie Dimethylformamid, N,N-Dimethylacetamid und N-Methylpyrolidon. Weiterhin können auch aromatische Lösemittel, Benzylalkohol, ggf. in Kombination mit den genannten Lösemitteln eingesetzt werden.
Aus DE 27 40 215 A1 sind Drahtlacke auf Basis von Polyvinylformalharz bekannt, die bestimmte Glykolether als Lösemittelkomponente enthalten müssen.
Es sind aus dem bisherigen Stand der Technik noch keine optimalen Lösemittel für Drahtlackformulierungen auf Basis von Polyvinylformal bekannt.

### Aufgabe:

Die vorliegende Erfindung hat sich die Aufgabe gestellt, einen Drahtlack auf Polyvinylformalbasis zu entwickeln, der die aufgezeigten Nachteile nicht aufweist und ohne Kresol formuliert werden kann, ohne dass die anwendungstechnischen Eigenschaften dadurch negativ beeinflusst werden.
Es sollte ferner eine Verwendung einer neuartigen Lösemittelzusammensetzung zum Lösen von Drahtlacken, Tränklacken gefunden werden.

### Lösung:

Diese Aufgabe wird durch eine bestimmte Lösemittelzusammensetzung, sowie durch Drahtlackformulierungen auf Polyvinylformalbasis gelöst, die eine bestimmte Lösemittelzusammensetzung enthalten, wobei die Lösemittelzusammensetzung Ethanol enthält und die Verwendung der Lösemittelzusammensetzung zum Lösen von Drahtlacken, Tränklacken.

### Begriffsdefinitionen:

Im Rahmen der vorliegenden Erfindung sind alle Mengenangaben, sofern nicht anders angegeben, als Gewichtsangaben zu verstehen.
Im Rahmen der vorliegenden Erfindung bedeutet der Begriff "Zimmertemperatur" eine Temperatur von 23°C. Temperaturangaben sind, soweit nicht anders angegeben, in Grad Celsius (°C).
Sofern nichts anderes angegeben wird, werden die angeführten Reaktionen bzw. Verfahrensschritte bei Normaldruck/Atmosphärendruck, d.h. bei 1013 mbar, durchgeführt.
Der Ausdruck (Meth)acryl soll im Rahmen der vorliegenden Erfindung sowohl Methacryl als auch Acryl bzw. Mischungen beider umfassen.
Im Rahmen der vorliegenden Erfindung wird hier und im folgenden unter dem Festkörper die Summe der Bestandteile einer Drahtlackformulierung verstanden, die nach der Härtung den Feststoff der resultierenden Produkte aufbauen.
Als Lösemittel mit einem hohen Siedepunkt/hochsiedende Lösemittel werden im Rahmen der vorliegenden Erfindung solche bezeichnet, deren Siedepunkt mindestens 160°C (bei 1013mbar Druck) beträgt.

### Detaillierte Beschreibung:

Die vorliegende Erfindung betrifft
- Drahtlackformulierungen auf Polyvinylformalbasis enthaltend eine Lösemittelzusammensetzung umfassend Ethanol, aromatischen Kohlenwasserstoff oder Kohlenwasserstoffgemisch, hochsiedendes Lösemittel,
- Verwendungen der Lösemittelzusammensetzung,
- Verfahren zur Herstellung der Drahtlackformulierungen und
- Verwendung der Drahtlackformulierungen.

Die erfindungsgemäß eingesetzte Lösemittelzusammensetzung besteht aus den folgenden Bestandteilen:
- 5 - 40, bevorzugt 10 - 30, besonders bevorzugt 12 - 25, Gewichtsteilen Ethanol,
- 10 - 55, bevorzugt 15 - 45, besonders bevorzugt 18 - 40, Gewichtsteilen aromatischem Kohlenwasserstoff oder Kohlenwasserstoffgemisch,
- 0 - 50, bevorzugt 5 - 40, besonders bevorzugt 8 - 35, Gewichtsteilen eines hochsiedenden Lösemittels.

In einer Variante der vorliegenden Erfindung besteht die Lösemittelzusammensetzung aus den drei genannten Bestandteilen (Ethanol, aromatischer Kohlenwasserstoff oder Kohlenwasserstoffgemisch und hochsiedendes Lösemittel) und zusätzlich 0 - 3 Gewichtsteilen weiteren Lösemitteln, z.B. kresolische Lösemittel, die ein technisches Gemisch von verschiedenen Kresol- und Xylenolisomeren, die auch Phenol enthalten können, sein können.

In einer weiteren Variante der vorliegenden Erfindung besteht die Lösemittelzusammensetzung aus den drei genannten Bestandteilen (Ethanol, aromatischer Kohlenwasserstoff oder Kohlenwasserstoffgemisch und hochsiedendes Lösemittel) und zusätzlich 0 - 5 Gewichtsteilen weiteren Lösemitteln, z.B. kresolische Lösemittel, die ein technisches Gemisch von verschiedenen Kresol- und Xylenolisomeren, die auch Phenol enthalten können, sein können.

Als aromatische Kohlenwasserstoffe sind insbesondere Toluol und technische aromatenhaltige Kohlenwasserstoffschnitte geeignet, inklusive Xylol, Solventnaphtha, Toluol, Ethylbenzol, Cumol, Schwerbenzol, verschiedene Solvesso und Shellsol-Typen sowie Deasol.
Erfindungsgemäß höchst bevorzugt ist Toluol.

Als Lösemittel mit einem hohen Siedepunkt einsetzbar sind hochsiedende Ester, inklusive Dimethylphthalat, Dimethyladipat, Dimethylsuccinat, Dimethylglutarat. Glykolester, inklusive Buytlglykolacetat, Ethyldiglycolacetat haben sich ebenfalls als Hochsieder bewährt und sind in der erfindungsgemäßen Lösemittelzusammensetzung einsetzbar.

In einer bevorzugten Variante werden als Lösemittel mit einem hohen Siedepunkt hochsiedende Ester, inklusive Dimethylphthalat, Dimethyladipat, Dimethylsuccinat, Dimethylglutarat, eingesetzt.
Ebenfalls einsetzbar sind Mischungen der genannten hochsiedenden Ester.

Erfindungsgemäß höchst bevorzugt ist Dimethylphthalat.

Erfindungsgemäß besonders bevorzugt wird eine Lösemittelzusammensetzung aus Ethanol, Toluol und Dimethylphthalat.

In einer Variante der vorliegenden Erfindung kann der eingesetzte Ethanol Bioethanol sein, wodurch die CO₂-Bilanz und damit der ökologische Vorteil der erfindungsgemäßen Lösemittelzusammensetzung weiter verbessert wird.

Die erfindungsgemäß eingesetzte Lösemittelzusammensetzung ist im Vergleich zu kresolhaltigen Lösemitteln aus ökologischen und arbeits- sowie sicherheitstechnischen Gesichtspunkten sehr viel besser, da sie im Gegensatz zu Kresol nicht giftig (im Sinne der Einstufung für Gefahrstoffe) ist.

Die erfindungsgemäß eingesetzte Lösemittelzusammensetzung ist geeignet, verschiedenste Bindemittel und Vernetzer zu lösen.
Besonders gut geeignet ist sie überraschenderweise für Lacke, besonders Drahtlacke, insbesondere Drahtlackzusammensetzungen auf Polyvinylformalbasis.

Die erfindungsgemäß eingesetzten Lösemittelzusammensetzungen werden demgemäß bevorzugt für Drahtlacke/Tränklacke und insbesondere bevorzugt für Drahtlackzusammensetzungen auf Polyvinylformalbasis, verwendet.

Die erfindungsgemäßen Drahtlackformulierungen sind an sich bekannt und unterscheiden sich von denen des Stand der Technik lediglich dadurch, dass sie die erfindungsgemäße Lösemittelzusammensetzungen enthalten.

Im Rahmen der vorliegenden Erfindung können als Bindemittel alle auf diesem technischen Gebiet üblichen Bindemittel verwendet werden.

Es ist erfindungsgemäß bevorzugt, Drahtlackformulierungen auf Basis von Polyvinylformalharz zu formulieren.

Marktübliche Polyvinylformalharze unterscheiden sich durch das Molekulargewicht, die OH-Zahl und durch den Gehalt an Estergruppen; erfindungsgemäß anwendbar sind dabei alle am Markt erhältlichen Polyvinylformalharze, sowie deren Mischungen.

Zusätzlich zu den reinen Bindemitteln werden im Rahmen der vorliegenden Erfindung noch Vernetzer eingesetzt.

Im Rahmen der vorliegenden Erfindung werden als Vernetzer die folgenden Stoffe verwendet: blockierte Polyisocyanate, Phenolharze, Melaminharze, Harnstoffharze usw., insbesondere ausgewählt aus der Gruppe bestehend aus blockierten Polyisocyanaten, Phenolharzen, Melaminharzen, Harnstoffharzen und Gemischen davon.

Als Vernetzer wird besonders bevorzugt eine Kombination aus einem kresolblockierten Polyisocyanat, einem Phenolharz und einem Melaminharz verwendet.

Ein erfindungsgemäß besonders bevorzugtes Polyisocyanat ist trimethylolpropanverzweigt und enthält 4,4-Methylendiphenyldiisocyanat.

Erfindungsgemäß ebenso einsetzbar sind Phenolharze auf Basis von alkylierten Resolen, deren Verwendung zum Härten von OH-Polyestern aus dem Stand der Technik bekannt ist.

Weiterhin sind erfindungsgemäß Melaminharze einsetzbar. Diese sind ebenfalls aus dem Stand der Technik zum vernetzen von OH-Polyester bekannt.

Neben den Bindemitteln, Vernetzern und Lösemitteln können die erfindungsgemäßen Drahtlacke noch weitere Bestandteile ausgewählt aus Farbstoffen, Verlaufs(hilfs)mitteln, Katalysatoren und Gemischen davon enthalten.

Drahtlackformulierungen mit besonders guten Eigenschaften haben folgende Zusammensetzung:
- 5 - 40, bevorzugt 10 - 30, besonders bevorzugt 12 - 25, Gew.-% Ethanol,
- 10 - 55, bevorzugt 15 - 45, besonders bevorzugt 18 - 40, Gew.-% aromatischer Kohlenwasserstoff oder Kohlenwasserstoffgemisch,
- 0 - 50, bevorzugt 5 - 40, besonders bevorzugt 8 - 35, Gew.-% eines hochsiedenden Lösemittels,
- 10 - 40, bevorzugt 15 - 35, besonders bevorzugt 20 - 30, Gew.-% Bindemittel und Vernetzer,
wobei sich die Angaben jeweils auf das Gesamtgewicht der Drahtlackformulierung, die 100 Gew.-% darstellt, beziehen und auf 100 Gew.-% addieren.

In einer Variante der vorliegenden Erfindung besteht die Drahtlackformulierung aus den vier genannten Bestandteilen (Ethanol, aromatischer Kohlenwasserstoff oder Kohlenwasserstoffgemisch, hochsiedendes Lösemittel und Bindemittel + Vernetzer) und zusätzlich 0 - 3 Gewichtsteilen weiteren Lösemitteln, z.B. kresolische Lösemittel, die ein technisches Gemisch von verschiedenen Kresol- und Xylenolisomeren, die auch Phenol enthalten können, sein können. Auch hierbei beziehen sich die Angaben jeweils auf das Gesamtgewicht der Drahtlackformulierung, die 100 Gew.-% darstellt, und addieren sich auf 100 Gew.-%.

In einer weiteren Variante der vorliegenden Erfindung besteht die Drahtlackformulierung aus den vier genannten Bestandteilen (Ethanol, aromatischer Kohlenwasserstoff oder Kohlenwasserstoffgemisch, hochsiedendes Lösemittel und Bindemittel + Vernetzer) und zusätzlich 0 - 5 Gewichtsteilen weiteren Lösemitteln, z.B. kresolische Lösemittel, die ein technisches Gemisch von verschiedenen Kresol- und Xylenolisomeren, die auch Phenol enthalten können, sein können. Auch hierbei beziehen sich die Angaben jeweils auf das Gesamtgewicht der Drahtlackformulierung, die 100 Gew.-% darstellt, und addieren sich auf 100 Gew.-%.

Die erfindungsgemäß eingesetzten Lösemittelzusammensetzungen haben sich überraschenderweise als optimale Lösemittel für die oben beschriebenen Drahtlackzusammensetzungen herausgestellt, wobei die besonders bevorzugte Lösemittelzusammensetzung aus Ethanol, Toluol und Dimethylphthalat insbesondere gut geeignet ist.

Das erfindungsgemäße Verfahren zur Herstellung der Drahtlackformulierungen ist dadurch gekennzeichnet, dass
a) die Lösemittelzusammensetzung vorgelegt wird,
b) darin bei erhöhter Temperatur das Polyvinylformalharz gelöst wird,
c) abgekühlt und die restlichen Komponenten zugegeben werden und
d) der Drahtlack homogenisiert und gegebenenfalls filtriert wird.

Anschließend kann noch eine weitere Verdünnung der Drahtlackformulierung auf die gewünschte Applikationsviskosität erfolgen, bevorzugt wird hierzu die erfindungsgemäß eingesetzte Lösemittelzusammensetzung benutzt.

Die Homogenisierung in Schritt d) wird bevorzugt durch Rühren bewerkstelligt, es sind aber auch andere Homogenisierungsverfahren, wie zum Beispiel mittels Ultraschall, möglich.
Die Filtration in Schritt d) erfolgt in einer Variante der vorliegenden Erfindung durch einen 5-10 my Filter.

Die erfindungsgemäßen Polyvinylformaldrahtlacke können mittels üblicher Drahtlackiermaschinen aufgebracht und gehärtet werden. Dabei kann die jeweils erforderliche Lackfilmstärke durch mindestens 1 bis zu 10 Einzelaufträgen aufgebaut werden, wobei jeder einzelne Lackauftrag vor dem erneuten Lackauftrag blasenfrei ausgehärtet wird. Übliche Lackiermaschinen arbeiten mit Abzugsgeschwindigkeiten von 5 bis zu 180 m/min, je nach Dicke des zu beschichtenden Drahtes. Typische Ofentemperaturen liegen zwischen 300 und 550°C.

Die verschiedenen Ausgestaltungen der vorliegenden Erfindung, z.B. diejenigen der verschiedenen abhängigen Ansprüche, können dabei in beliebiger Art und Weise miteinander kombiniert werden.

Die Erfindung wird nun unter Bezugnahme auf die folgenden nicht-limitierenden Beispiele erläutert.

### Beispiel 1 - PUR-Vernetzer:

29,5 g m,p-Kresol und 27,8 g 4,4-Methylendiphenyldiisocyanat wurden in einem Dreihalskolben, versehen mit Rührer, Rückflusskühler, Stickstoffeinleitungsrohr bei 110°C umgesetzt. Nach 30 Minuten wurden 5,5 g Trimetylolpropan und 0,01 g Dibutylzinndilaurat zugegeben und 2 Stunden bei 130°C gehalten. Der Ansatz wurde mit 18,0 g m,p-Kresol und 20 g Solvesso 100 verdünnt. Der Vernetzer hatte einen Festkörpergehalt von 40,3% bei einer Viskosität von 6280 mPas.

### Beispiel 2 - Polyvinylformaldrahtlack 1:

In einem Dreihalskolben, versehen mit Rührer, Rückflusskühler, Stickstoffeinleitungsrohr wurden 29,0 g Toluol, 20,0 g Ethanol und 19,5 g Dimethylphthalat vorgelegt und auf 75°C erwärmt. Bei 75° C wurden 13,5 g Polyvinylformalharz (Vinylec®) zugegeben. Nach 2 Stunden wurde auf 60°C gekühlt. Der Ansatz wurde mit 3,9 g PUR-Vernetzer aus Beispiel 1, 8,6 g eines handelsüblichen Resols (80%-ig in Butanol) (Phenodur® PR612) und 0,5 g eines handelsüblichen Melaminharzes (Priam® RMF 7960) versetzt. Mit 5,0 g Toluol wurde die Viskosität auf 2800 mPas eingestellt. Die Festkörperbestimmung ergab 21,0%.

### Beispiel 3 - Polyvinylformaldrahtlack 2:

In einem Dreihalskolben, versehen mit Rührer, Rückflusskühler, Stickstoffeinleitungsrohr wurden 34,9 g Toluol, 23,0 g Ethanol und 10,3 g Dimethylphthalat vorgelegt und auf 75°C erwärmt. Bei 75°C wurden 13,5 g Polyvinylformalharz (Vinylec®) zugegeben. Nach 2 Stunden wurde auf 60°C gekühlt. Der Ansatz wurde mit 3,9 g PUR-Vernetzer aus Beispiel 1, 8,6 g eines handelsüblichen Resols (80 %-ig in Butanol) (Phenodur® PR612) und 0,5 g eines handelsüblichen Melaminharzes (Priam® RMF 7960) versetzt. Mit 5,0 g Toluol wurde die Viskosität auf 2450 mPas eingestellt. Die Festkörperbestimmung ergab 20,7%.

### Beispiel 4 - Polyvinylformaldrahtlack 3:

In einem Dreihalskolben, versehen mit Rührer, Rückflusskühler, Stickstoffeinleitungsrohr wurden 20,5 g Toluol, 13,7 g Ethanol und 34,3 g Dimethylphthalat vorgelegt und auf 75°C erwärmt. Bei 75°C wurden 13,5 g Polyvinylformalharz (Vinylec®) zugegeben. Nach 2 Stunden wurde auf 60°C gekühlt. Der Ansatz wurde mit 3,9 g PUR-Vernetzer aus Beispiel 1, 8,6 g eines handelsüblichen Resols (80 %-ig in Butanol) (Phenodur® PR612) und 0,5 g eines handelsüblichen Melaminharzes (Priam® RMF 7960) versetzt. Mit 5,0 g Toluol wurde die Viskosität auf 3480 mPas eingestellt. Die Festkörperbestimmung ergab 21,2%.

### Beispiel 5 - Vergleichsbeispiel kresolischer Polyvinylformaldrahtlack:

In einem Dreihalskolben, versehen mit Rührer, Rückflusskühler, Stickstoffeinleitungsrohr wurden 30 g m,p-Kresol vorgelegt und auf 75°C erwärmt. Bei 75°C wurden 13,5 g Polyvinylformalharz (Vinylec®) zugegeben. Nach 2 Stunden wurde auf 60°C gekühlt. Der Ansatz wurde mit 3,9 g PUR-Vernetzer aus Beispiel 1, 8,6 g eines handelsüblichen Resols (80 %-ig)(Phenodur® PR612) und 0,5 g eines handelsüblichen Melaminharzes (Priam® RMF 7960) versetzt. Mit 44,0 g Solvesso 100 wurde die Viskosität auf 6500 mPas eingestellt. Der Festkörper betrug 20,8%.

### Beispiel 6 - Lackierergebnisse:

Der Polyvinylformaldrahtlack 1 wurde auf einer industrieüblichen Vertikallackiermaschine mit den folgenden Lackierbedingungen lackiert:

| | |
|---|---|
| Drahtdurchmesser : | 4,124 mm |
| Durchmesserzunahme: | 0,097 mm |
| Anzahl der Durchzüge: | 10 |

Die Prüfung erfolgte nach IEC 851.

| | |
|---|---|
| Bruchdehnung: | 37% |
| Durchschlagspannung: | 14300 V |
| Außenfaserdehnung: | 39% + 3xd |
| Wärmeshock (30%+1xd): | i.O. bei 200°C/30 min. |
| Pinhole: | ohne |

Die Polyvinylformallacke 2 und 3 sowie der kresolische Lack ergaben identische Lackierergebnisse.

## Patentansprüche

1. Drahtlackformulierung auf Polyvinylformalbasis mit folgender Zusammensetzung
- 5 - 40 Gew.-% Ethanol,
- 10-55Gew.-% aromatischer Kohlenwasserstoff oder Kohlenwasserstoffgemisch,
- 0 - 50 Gew.-% hochsiedendes Lösemittel,
- 10 - 40 Gew.-% Bindemittel auf Basis von Polyvinylformalharz und Vernetzer,
wobei sich die Angaben jeweils auf das Gesamtgewicht der Drahtlackformulierung, die 100 Gew.-% darstellt, beziehen und auf 100 Gew.-% addieren, und wobei
das hochsiedende Lösemittel ein hochsiedender Ester oder Glykolester mit einem Siedepunkt von mindestens 160°C ist.

2. Drahtlackformulierung nach Anspruch 1 in der der aromatische Kohlenwasserstoff Toluol ist.

3. Drahtlackformulierung nach Anspruch 1, wobei das hochsiedende Lösemittel ein hochsiedender Ester ausgewählt aus Dimethylphthalat, Dimethyladipat, Dimethylsuccinat und/oder Dimethylglutarat ist.

4. Drahtlackformulierung nach Anspruch 3 in der das hochsiedende Lösemittel Dimethylphthalat ist.

5. Verwendung der Drahtlackformulierung nach einem der Ansprüche 1 bis 4 zur Herstellung von Wickeldrähten.

6. Verfahren zur Herstellung von Drahtlackformulierungen nach einem der Ansprüche 1 bis 5, **dadurch gekennzeichnet, dass**
a) die Lösemittelzusammensetzung vorgelegt wird,
b) darin bei erhöhter Temperatur das Polyvinylformalharz gelöst wird,
c) abgekühlt und die restlichen Komponenten zugegeben werden und
d) der Drahtlack homogenisiert und gegebenenfalls filtriert wird.

7. Verwendung einer Lösemittelzusammensetzung bestehend aus
- 5 - 40 Gewichtsteilen Ethanol,
- 10 - 55 Gewichtsteilen aromatischem Kohlenwasserstoff oder Kohlenwasserstoffgemisch,
- 0 - 50 Gewichtsteilen eines hochsiedenden Lösemittels,
wobei das hochsiedende Lösemittel ein hochsiedender Ester oder Glykolester mit einem Siedepunkt von mindestens 160°C ist
zum Lösen von Drahtlacken, Tränklacken.

## Claims

1. Wire enamel formulation based on polyvinyl formal, with the following constitution:
- 5 - 40% by weight of ethanol,
- 10 - 55% by weight of aromatic hydrocarbon or hydrocarbon mixture,
- 0 - 50% by weight of high-boiling solvent,
- 10 - 40% by weight of binder based on polyvinyl formal resin and crosslinker,
the figures being based in each case on the total weight of the wire enamel formulation, which represents 100% by weight, and adding up to 100% by weight, and
the high-boiling solvent being a high-boiling ester or glycol ester having a boiling point of at least 160°C.

2. Wire enamel formulation according to Claim 1, in which the aromatic hydrocarbon is toluene.

3. Wire enamel formulation according to Claim 1, wherein the high-boiling solvent is a high-boiling ester selected from dimethyl phthalate, dimethyl adipate, dimethyl succinate and/or dimethyl glutarate.

4. Wire enamel formulation according to Claim 3, in which the high-boiling solvent is dimethyl phthalate.

5. Use of the wire enamel formulation according to any of Claims 1 to 4 for producing winding wires.

6. Process for preparing wire enamel formulations according to any of Claims 1 to 5, **characterized in that**
a) the solvent composition is introduced,
b) the polyvinyl formal resin is dissolved therein at elevated temperature,
c) the solution is cooled and the remaining components are added, and
d) the wire enamel is homogenized and optionally filtered.

7. Solvent composition composed of
- 5 - 40 parts by weight of ethanol,
- 10 - 55 parts by weight of aromatic hydrocarbon or hydrocarbon mixture,
- 0 - 50 parts by weight of a high-boiling solvent,
the high-boiling solvent being a high-boiling ester or glycol ester having a boiling point of at least 160°C
for dissolving wire enamels, impregnating varnishes.

## Revendications

1. Composition de vernis pour fils métalliques à base de polyvinylformal, ayant la composition suivante
- 5 - 40 % d'éthanol,
- 10 - 55 % en poids d'hydrocarbure aromatique ou de mélange d'hydrocarbures aromatiques,
- 0 - 50 % en poids de solvant à haut point d'ébullition,
- 10 - 40 % en poids de liant à base de résine polyvinylformal et d'agent de réticulation,
les données se rapportant chacune au poids total de la composition de vernis pour fils métalliques, qui représente 100 % en poids, et leur somme étant égale à 100 % en poids, et
le solvant à haut point d'ébullition étant un ester à haut point d'ébullition ou un ester de glycol ayant un point d'ébullition d'au moins 160 °C.

2. Composition de vernis pour fils métalliques selon la revendication 1, dans laquelle l'hydrocarbure aromatique est le toluène.

3. Composition de vernis pour fils métalliques selon la revendication 1, dans laquelle le solvant à haut point d'ébullition est un ester à haut point d'ébullition choisi parmi le phtalate de diméthyle, l'adipate de diméthyle, le succinate de diméthyle et/ou le glutarate de diméthyle.

4. Composition de vernis pour fils métalliques selon la revendication 3, dans laquelle le solvant à haut point d'ébullition est le phtalate de diméthyle.

5. Utilisation de la composition de vernis pour fils métalliques selon l'une quelconque des revendications 1 à 4 pour la fabrication de fils métalliques torsadés.

6. Procédé pour la préparation de compositions de vernis pour fils métalliques selon l'une quelconque des revendications 1 à 5, **caractérisé en ce que**
a) on dispose au préalable la composition de solvant,
b) on dissolut dans celle-ci, à température élevée, la résine polyvinylformal,
c) on refroidit et on ajoute les composants restants et
d) on homogénéise le vernis pour fils métalliques et éventuellement on le filtre.

7. Utilisation d'une composition de solvant, constituée de
- 5 - 40 parties en poids d'éthanol,
- 10 - 55 parties en poids d'hydrocarbure aromatique ou de mélange d'hydrocarbures aromatiques,
- 0 - 50 parties en poids d'un solvant à haut point d'ébullition,
le solvant à haut point d'ébullition étant un ester à haut point d'ébullition ou un ester de glycol ayant un point d'ébullition d'au moins 160 °C
pour la dissolution de vernis pour fils métalliques, vernis d'imprégnation.
